# EUROPEAN PATENT APPLICATION

(11) **EP 4 706 997 A1**
(43) Date of publication of application: **11.03.2026**
(21) Application number: 25197553.8
(22) Date of filing: 22.08.2025
(51) Int. Cl.: B60C 23/06, B60C 23/00

(54) **AUTOMATIC TIRE PRESSURE ADJUSTMENT TO OPTIMIZE TIRE PERFORMANCE ACCORDING TO FOOTPRINT LENGTH**

(30) Priority: 27.08.2024 US 202463687420 P; 05.06.2025 US 202519229525
(71) Applicant: The Goodyear Tire & Rubber Company, Akron, OH 44316 (US)
(72) Inventor: MORRIS, Brian Richard, Uniontown, 44685 (US); SUH, Peter Jung-min, Copley, 44321 (US)
(74) Representative: Kutsch, Bernd

(57) **Abstract**

A system and method for optimizing tire performance is disclosed. The system comprises a sensor (109) affixed to an innerliner of a tire (100) of a vehicle (203); an automatic tire inflation system (206) coupled to the tire (100); a computing device (112) comprising a processor and a memory, the sensor (109) and the automatic tire inflation system (206) being communicatively coupled to the computing device (112); and machine-readable instructions stored in the memory that, when executed by the processor, cause the computing device (112) to at least: determine a footprint length (127) of the tire (100) based at least in part on sensor data obtained from the sensor (109); compare the footprint length (127) with a target footprint length range; and send an instruction to the automatic tire inflation system (206) to initiate inflating or deflating the tire (100) in an instance in which the footprint length (127) is outside the target footprint length range.

## Description

### BACKGROUND

A footprint length of a tire refers to the length of the portion that makes contact with the road. The footprint length can be a good indicator of numerous features of a tire, such as traction, handling, wear, fuel efficiency, comfort, performance, and load-bearing capacity. The footprint length can vary based on various factors of the tire, such as the vehicle load, pressure, temperature, and wear state of the tire. The footprint length can impact areas such as tire performance, vehicle safety, fuel efficiency, and environmental sustainability.

### SUMMARY OF THE INVENTION

The invention relates to a system in accordance with claim 1 and to a method in accordance with claim 9.

Dependent claims refer to preferred embodiments of the invention.

### BRIEF DESCRIPTION OF THE DRAWINGS

Many aspects of the present invention can be better understood with reference to the following drawings. The components in the drawings are not necessarily to scale, with emphasis instead being placed upon clearly illustrating the principles of the invention. Moreover, in the drawings, like reference numerals designate corresponding parts throughout the several views.
FIG. 1A a pictorial diagram of a tire in a forward perspective view showing a portion bisected to demonstrate a sensor within the tire according to various embodiments of the present invention.
FIG. 1B a pictorial diagram of a tire footprint made by a tire according to various embodiments of the present invention.
FIG. 2 illustrates an example diagram of a top view of a vehicle illustrating vehicle components according to various embodiments of the present invention.
FIG. 3 is a drawing of a network environment according to various embodiments of the present invention.
FIG. 4 is a flowchart illustrating one example of functionality implemented as portions of an application executed in a computing environment in the network environment of FIG. 2 according to various embodiments of the present invention.

### DETAILED DESCRIPTION OF PREFERRED EMBODIMENTS

Disclosed are various approaches for optimizing tire performance based at least in part on the footprint length of the footprint of the tire. In particular, tire performance can be optimized by ensuring that a footprint length of a given tire is within a target or optimal footprint length range. In various examples, a footprint length of a given tire can be measured in real-time during the operation of the vehicle via a sensor affixed to the given tire. If the footprint length is below or above a target footprint length range, the tire may need to be inflated or deflated to be within the optimal footprint length range. Therefore, in various example, upon detection of a footprint length being outside the optimal footprint length range, an instruction can be sent to an automatic air inflation system of a vehicle to initiate the inflation or deflation of the tire. Once the tire footprint length is measured to be within the optimal footprint length range, the automatic air inflation system can be instructed to stop the inflation or deflation of the tire.

In the following discussion, a general description of the system and its components is provided, followed by a discussion of the operation of the same. Although the following discussion provides illustrative examples of the operation of various components of the present invention, the use of the following illustrative examples does not exclude other implementations that are consistent with the principals disclosed by the following illustrative examples.

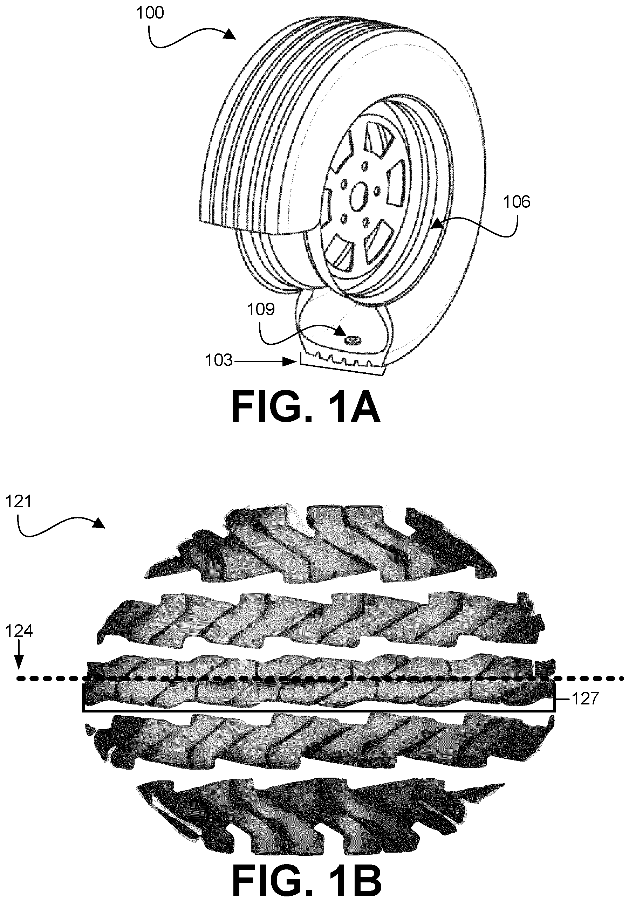

As illustrated in FIG. 1A, shown is an example of a tire 100 as referenced in various embodiments of this invention. The tire 100 can incorporate a multi-layered construction from various materials. Each tire 100 includes a pair of sidewalls that extend to a circumferential tread 103, which engages the ground during vehicle operation. When mounted to a wheel 106, a tire 100 can be configured to maintain gasses and/or air within an inner cavity between inner walls lateral to the sidewalls, an innerliner laterally attached to the circumferential tread 103, and an inner cavity of the wheel 106. The inner cavity can maintain a varying amount of pressure based at least on the various configurations of the tire, such as tire size (e.g., depth, radius, circumference, etc.), tire materials, and environmental conditions (e.g., environmental temperature, etc.).

The tire 100 can include a sensor 109. The sensor 109 is mounted on or otherwise affixed to each tire 100 of a vehicle. For example, the sensor 109 can be affixed to at least one of the inner liner laterally attached the circumferential tread 103 (as shown in FIG. 1A), the inner walls of the tire 100, or the inner portion of the wheel 106. In some embodiments, the sensor 109 can be affixed using an adhesive. In some embodiments, the sensor 109 can be affixed by being embedded within the structure that the sensor 109 is affixed (e.g., the walls of the tire, the wheel 106, etc.).

The sensor 109 can be used to measure certain real-time parameters of the tire 100, such as a footprint length, an inflation pressure, and a temperature, as well as various other measurements. The sensor 109 can measure footprint length using metric units (e.g., millimeters, centimeters, etc.) or imperial units (e.g., inches, feet, etc.). For example, the sensor 109 can comprise an accelerometer that measures the footprint length by measuring the entry and exit points during a duration of one rotation. In various examples, the sensor 109 can also measure inflation pressure in various unit types, such as pounds per square inch (PSI), pascals (Pa) or kilopascals (kPa), bars, atmospheres (ATM), and kilograms per square centimeter (kg/cm²). The sensor 109 can also measure temperature in various unit scales, such as Celsius, Fahrenheit, Kelvin, or other temperature scales. In various embodiments, the sensor 109 can be a tire pressure monitoring system (TPMS) sensor and or a sensor unit comprising one or more sensors 109 configured to measure various real-time parameters.

In various examples, the sensor 109 comprise a processor and memory to store vehicle tire information for each specific tire 100. For example, the tire vehicle tire information may include a tire identifier (ID), manufacturing information for the tire 100 (e.g., model number, manufacturer name, etc.), size information (e.g., rim size, width, and outer diameter), manufacturing location, manufacturing date, a treadcap code that includes or correlates to a compound identification, a mold code that includes or correlates to a tread structure identification, and/or other information. The vehicle tire information may also include a service history or other information to identify specific features and parameters of each tire 100. Alternativity or additionally, the vehicle tire information may be included in another sensor 109, or in a separate vehicle storage medium, such as a tire ID tag, which preferably is in electronic communication with the sensor 109.

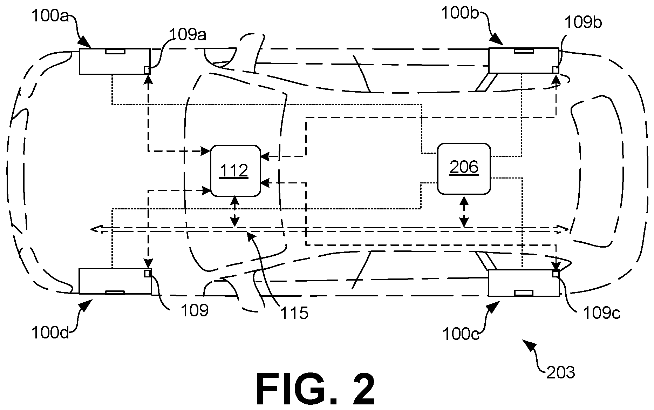

The sensor 109 can further include an antenna (not shown) for wirelessly transmitting measured parameters and tire information data to a remote processor for analysis, such as a processor integrated into a vehicle computing device 112 (FIG. 2), the Controller Area Network (CAN) bus 115 (FIG. 2) associated with the vehicle 203 (FIG. 2), and/or a cloud computing device. According to various embodiments, each one of the tires 100 on the vehicle may include one or more of the sensor 109.

In FIG. 1B, depicted is an example footprint 121 made by a tire 100. The footprint shows the imprint or impression made by the treads 103 of the tire 100 as it is making contact with a surface. The footprint 121 can be used to demonstrate various ways to measure a footprint length of the tire 100. For example, at least one way to measure a footprint length is along the center line 124 (as depicted as a dashed line horizontally shown in FIG. 1B) of the footprint 121. The footprint length 127 depicts the portion of the footprint 121 that would be measured using any standard means of measurement.

The footprint length 127 can be affected based on various factors. For instance, the size or design, inflation pressure, the weight distribution of a vehicle, load of a vehicle, road conditions, and/or various other factors. Specifically, an increase in inflation pressure decreases the footprint length 127. Reciprocally, a decrease in inflation pressure increases the footprint length 127. Additionally, an increase on the load or weight on the tire 100 also increases the footprint length 127. Reciprocally, a decrease on the load or weight on the tire 100 also decreases the footprint length 127. Additionally, various road conditions like off-road environment conditions can modify the footprint length 127 as it relates to the environment.

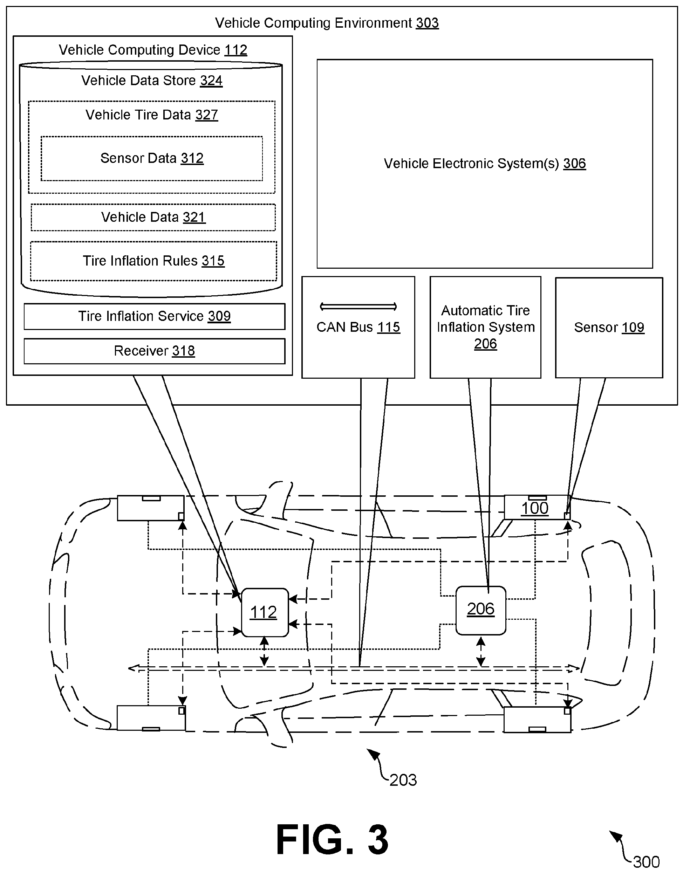

Turning now to FIG. 2, shown an example diagram of a top view of a vehicle 203 illustrating vehicle components including tires 100 (e.g., 100a, 100b, 100c, 100d), sensors 109 (e.g., 109a, 109b, 109c, 109d) attached to the tires 100, a vehicle computing device 112, a controller area network (CAN) bus 115, and an automatic tire inflation system 206. The automatic tire inflation system 206 corresponds to a system that is configured to activate the inflation and/or deflation process of a tire 100. In various examples, the automatic tire inflation system 206 is coupled to each of the tires 100 of the vehicle 203 and can adjust the level of pressurized air to each of the tires 100 individually during the operation of the vehicle 203. In various examples, the automatic tire inflation system 206 is electrically coupled to the vehicle computing device 112. For example, the automatic tire inflation system 206 can be coupled to the vehicle computing device 112 via the CAN bus 115 and/or other electrical means. In accordance with various embodiments, the vehicle computing device 112 can provide instructions to the automatic tire inflation system 206 to initiate and/or stop the inflation and/or deflation of a given tire 100. The vehicle computing device 112 and the CAN bus 115 are discussed in more detail with regard to FIG. 3.

While the vehicle 203 of FIG. 2 is depicted as a passenger car, the vehicle 203 may comprise any type of vehicle that employs tires where the passenger car is presented as an example. To this end, the vehicle 203 may comprise other vehicles falling into various categories such as commercial trucks and trailers, off-road vehicles and the like, in which such vehicles 203 include a greater or lesser number of tires 100 than are shown in FIG. 2.

Turning now to FIG. 3, shown is an example networked environment 300 according to various embodiments. FIG. 3 illustrates a networked environment 300 that includes a vehicle computing environment 303. The vehicle computing environment 303 can comprises a vehicle computing device 112, a CAN bus 115, an automatic tire inflation system 206, one or more vehicle electronic systems 306, and sensor(s) 109 which can be in data communication with each other via one or more networks. The vehicle computing device 112 comprises a processor circuit that executes applications associated with the control and/or operation of the vehicle 203. For example, in FIG. 3, the processor circuit of the vehicle computing device 112 can execute a tire inflation service 309, and/or other applications.

The tire inflation service 309 can be executed to analyze sensor data 312 obtained from the sensor 109 of a given tire 100. In some examples, the sensor data 312 includes a footprint length 127 (FIG. 1B) that is measured by the sensor 109 of the tire 100. In some examples, the sensor data 312 can include real-time parameter measurements that can be used to calculate the footprint length 127. For example, the tire inflation service 309 can obtain the sensor data 312 and calculate the footprint length 127 according to one or more footprint length algorithms stored in the tire inflation rules 315.

Upon determining the footprint length 127, the tire inflation service 309 can compare the footprint length 127 with a selected target footprint length range for the given tire 100. In various examples, the target footprint length range corresponds to a footprint length that optimizes tire performance. The target footprint length range can be based at least in part on a tire position on the vehicle 203 (e.g., front, rear, left, right), a tire type, a load, and/or other factors. The target footprint length range can be one of a plurality of target footprint length ranges that are included in the tire inflation rules 315, a table, or other type of storage. Accordingly, the tire inflation service 309 can select the appropriate target footprint range based at least in part on the tire position, the tire load, the tire type, and/or other factors. In various examples, the target footprint range can comprise a static footprint length value. In other examples, the target footprint length range can comprise a range of values defined by a minimum and a maximum footprint length. In some examples, target footprint length range can be predefined. In other examples, the tire inflation service 309 can calculate the target footprint length range based at least in part on the sensor data 312, vehicle data 321, and/or other data.

The tire inflation service 309 can compare the measured footprint length 127 with the target footprint range to determine if the tire 100 needs to be inflated or deflated. If the measured footprint length 127 is below the target footprint length range, the tire 100 should be deflated. Likewise, if the measured footprint length 127 is above the target footprint length range, the tire 100 should be inflated. The tire inflation service 309 can instruct the automatic tire inflation system 206 to initiate the inflation or deflation of the tire 100 when the measured footprint length 127 is outside the target footprint length range.

The tire inflation service 309 can continue to measure the real-time footprint length 127 of the tire 100 after instructing the automatic tire inflation system 206 to initiate the inflation or deflation of the tire 100. When a subsequent real-time measured footprint length 127 is within the target footprint length range, the tire inflation service 309 can instruct the automatic tire inflation system 206 to stop inflating or deflating the tire 100.

In various examples, the vehicle computing device 112 can also comprise a receiver 318 for obtaining sensor data 312 transmitted from the sensors 109 affixed to the tires 100 of the vehicle 203 and other vehicle data 321 obtained from the CAN bus 118 associated with the vehicle 203, and/or other data that is accessible over a network.

Also, various data is stored in a vehicle data store 324 that is accessible to the vehicle computing device 112. The data store 324 may be representative of a plurality of data stores 324 as can be appreciated. The data stored in the data store 324 for example, is associated with the operation of the various applications and/or functional entities associated with the vehicle 203. For example, the data store 324 can include vehicle tire data 327, vehicle data 321, tire inflation rules 315, and/or other information.

The vehicle tire data 327 can include information for each specific tire 100. For example, the vehicle tire data 327 may include a tire identifier, manufacturing information for the tire 100 (e.g., manufacture name, tire model, etc.), tire size information (e.g., rim size, width, and outer diameter, etc.), manufacturing location, manufacturing date, a treadcap code that includes or correlates to a compound identification, a mold code that includes or correlates to a tread structure identification, and/or other information. The vehicle tire data 327 may also include a service history or other information to identify specific features and parameters of each tire 100. The vehicle tire data 327 can further include sensor data 312 and/or other data.

The sensor data 312 can comprise data collected from a sensor 109 on a given tire 100. As previously discussed, the sensor 109 can measure certain real-time parameters of the tire 100, such as a footprint length, an inflation pressure, a temperature, as well as various other measurements. In various examples, the sensor 109 can measure footprint length 127 using metric units (e.g., millimeters, centimeters, etc.) or imperial units (e.g., inches, feet, etc.). For example, the sensor 109 can comprise an accelerometer that measures the footprint length 127 by measuring the entry and exit points during a duration of one rotation of the tire 100. In some examples, the sensor 109 can also measure inflation pressure, temperature, and/or other real-time parameters of the tire 100.

The vehicle data 321 can include data associated with a vehicle 203 supported by the tire 100. The vehicle data 321 can be obtained from a vehicle CAN bus 115 in communication with one or more vehicle systems 306 of a vehicle 203 supported by the tire 100. The vehicle data 321 can include an engine torque, an engine revolutions per minute (RPM), a vehicle speed, a wheel speed, a vehicle acceleration, a vehicle load, an odometer value, a brake cylinder pressure value, and/or other type of vehicle data.

The tire inflation rules 315 include rules, models, and/or configuration data for the various algorithms or approaches employed by tire inflation service 309, and/or other application or device. In some examples, the tire inflation rules 315 can include predefined target footprint ranges. In other examples, the tire inflation rules 315 can include the various models, formulas, equations, and/or algorithms for calculating a target footprint range based at least in part on the tire position, tire load, tire type, and/or other factors.

In various examples, the vehicle computing device 112 can include a communication system to facilitate communication with vehicle components of the vehicle 203 (e.g., obtaining the sensor data 312 and vehicle data 321, etc.), a remote computing environment over a network, a user client device, or other type of computing device. In this respect, the vehicle computing device 112 may include appropriate communications capabilities to link to a cellular network, Wi-Fi network, BLUETOOTH^{®} network, microwave transmission network, radio broadcast networks, or other communication networks.

Although illustrated in FIG. 3 as being separate from the vehicle electronic systems 306, in some examples, the vehicle computing device 112 and/or the automatic tire inflation system 206 may be integrated with other vehicle electronic systems 306 in the vehicle 203. In various examples, the vehicle computing device 112 can be coupled to the CAN bus 115 and may communicate with other vehicle electronic systems 306 included on the CAN bus 115.

In various examples, the vehicle electronic system 306 can include electronic components of a vehicle 203 that are responsible for managing and regulating various operations of the vehicle 203. For example, the vehicle electronic system 306 can include an engine control system, a transmission control system, a brake system, a suspension system, a steering system, and/or other type of system of vehicle. The vehicle electronic systems 306 can coupled to a CAN bus 115 to allow communication among the different vehicle electronic systems 306 as can be appreciated. In various examples, a vehicle electronic system 306 can comprise a processor circuit for executing applications to adjust the operational aspects associated with the particular vehicle electronic system 306.

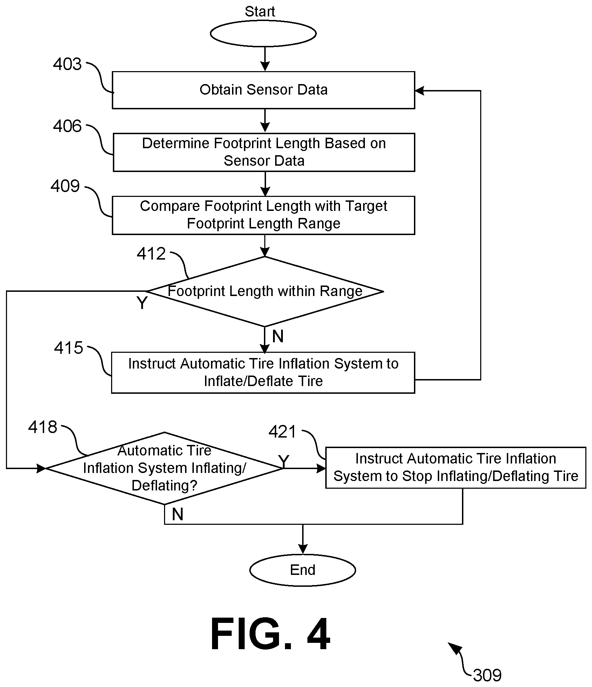

Next, a general description of the operation of the various components of the networked environment 300 is provided with reference to FIG. 4. FIG. 4 is a flowchart that provides one example of the operation of a portion of the tire inflation service 309. The flowchart of FIG. 4 provides merely an example of the many different types of functional arrangements that can be employed to implement the operation of the depicted portion of the tire inflation service 309. As an alternative, the flowchart of FIG. 4 can be viewed as depicting an example of elements of a method implemented within the networked environment 300.

Beginning with block 403, the tire inflation service 309 can obtain the sensor data 312. In various examples, the sensor data 312 can be obtained via a directly wired or wireless communication connection between the vehicle computing device 112 and the sensor 109 of a given tire 100. In other examples, sensor data 312 is obtained via the CAN bus 118. The tire sensor data 212 can include real-time footprint length 127. In various examples, the sensor data 212 further includes temperature data, pressure data, and/or other types of data that can be measured by the sensor 109. In some examples, the sensor data 312 is obtained periodically, randomly, and/or according to a given schedule.

At block 406, the tire inflation service 309 can determine a footprint length 127 of a given tire 100 based at least in part on the obtained sensor data 312. In some examples, the sensor data 312 includes the footprint length 127. In other examples, the tire inflation service 309 calculates the footprint length 127 using one or more parameters included in the sensor data 312. For example, the tire inflation service 309 can use the various rules, models, and/or algorithms in the tire inflation rules 315 to calculate the footprint length 127. In various examples, the footprint length 127 corresponds to a direct measurement and is not estimated according to a vehicle or tire load.

At block 409, the tire inflation service 309 compares the footprint length 127 to a target footprint length range. In various examples, the target footprint length range corresponds to a footprint length that optimizes tire performance. The target footprint length range can be based at least in part on a tire position on the vehicle 203 (e.g., front, rear, left, right), a tire type, a load, and/or other factors. The target footprint length range can be one of a plurality of target footprint length ranges that are included in the tire inflation rules 315, a table, or other type of storage. Accordingly, the tire inflation service 309 can select the appropriate target footprint range based at least in part on the tire position, the tire load, the tire type, and/or other factors. In various examples, the target footprint range can comprise a static footprint length value. In other examples, the target footprint length range can comprise a range of values having a minimum and maximum footprint length. In some examples, target footprint length range can be predefined. In other examples, the tire inflation service 309 can calculate the target footprint length range based at least in part on the sensor data 312, vehicle data 321, and/or other data.

At block 412, the tire inflation service 309 determines if the footprint length 127 is within the target footprint length range. If the footprint length 127 is within the target footprint length range, the tire inflation service 309 proceeds to block 418. Otherwise, the tire inflation service 309 proceeds to block 415.

At block 415, the tire inflation service 309 sends an instruction to the automatic tire inflation system 206 to initiate the If the measured footprint length 127 is below the target footprint length range, the tire 100 should be deflated. Likewise, if the measured footprint length 127 is above the target footprint length range, the tire 100 should be inflated. The tire inflation service 309 can instruct the automatic tire inflation system 206 to initiate the inflation or deflation of the tire 100 when the measured footprint length is outside the target footprint length range. Upon sending the instruction to inflate or deflate the tire, the tire inflation service 309 returns to block 403 to repeat the process until the measured footprint length 127 is within the target footprint length range.

At block 418, the tire inflation service 309 determines if the automatic tire inflation system 206 is inflating or deflating the tire 100 based at least in part on a prior instruction. For example, if the tire inflation service 309 has already instructed the automatic tire inflation system 206 to inflate or deflate the tire 100 and has not instructed the tire inflation service 309 to stop, the tire inflation service 309 will proceed to block 421. Otherwise, this portion of the process proceeds to completion.

At block 421, the tire inflation service 309 sends an instruction to the automatic tire inflation system 206 to stop inflating or deflating the tire 100. Thereafter, this portion of the process proceeds to completion.

A number of software components previously discussed are stored in the memory of the respective computing devices and are executable by the processor of the respective computing devices. In this respect, the term "executable" means a program file that is in a form that can ultimately be run by the processor. Examples of executable programs can be a compiled program that can be translated into machine code in a format that can be loaded into a random-access portion of the memory and run by the processor, source code that can be expressed in proper format such as object code that is capable of being loaded into a random-access portion of the memory and executed by the processor, or source code that can be interpreted by another executable program to generate instructions in a random-access portion of the memory to be executed by the processor. The memory includes both volatile and nonvolatile memory and data storage components. Volatile components are those that do not retain data values upon loss of power. Nonvolatile components are those that retain data upon a loss of power.

Although the applications and systems described herein can be embodied in software or code executed by general purpose hardware as discussed above, as an alternative the same can also be embodied in dedicated hardware or a combination of software/general purpose hardware and dedicated hardware. If embodied in dedicated hardware, each can be implemented as a circuit or state machine that employs any one of or a combination of a number of technologies.

The flowchart shows the functionality and operation of an implementation of portions of the various embodiments of the present invention. If embodied in software, each block can represent a module, segment, or portion of code that includes program instructions to implement the specified logical function(s). The program instructions can be embodied in the form of source code that includes human-readable statements written in a programming language or machine code that includes numerical instructions recognizable by a suitable execution system such as a processor in a computer system. The machine code can be converted from the source code through various processes. For example, the machine code can be generated from the source code with a compiler prior to execution of the corresponding application. As another example, the machine code can be generated from the source code concurrently with execution with an interpreter. Other approaches can also be used. If embodied in hardware, each block can represent a circuit or a number of interconnected circuits to implement the specified logical function or functions.

Although the flowchart shows a specific order of execution, it is understood that the order of execution can differ from that which is depicted. For example, the order of execution of two or more blocks can be scrambled relative to the order shown. Also, two or more blocks shown in succession can be executed concurrently or with partial concurrence. Further, in some embodiments, one or more of the blocks shown in the flowchart can be skipped or omitted. In addition, any number of counters, state variables, warning semaphores, or messages might be added to the logical flow described herein, for purposes of enhanced utility, accounting, performance measurement, or providing troubleshooting aids, etc. It is understood that all such variations are within the scope of the present invention.

Also, any logic or application described herein that includes software or code can be embodied in any non-transitory computer-readable medium for use by or in connection with an instruction execution system such as a processor in a computer system or other system. In this sense, the logic can include statements including instructions and declarations that can be fetched from the computer-readable medium and executed by the instruction execution system. In the context of the present invention, a "computer-readable medium" can be any medium that can contain, store, or maintain the logic or application described herein for use by or in connection with the instruction execution system. Moreover, a collection of distributed computer-readable media located across a plurality of computing devices (e.g., storage area networks or distributed or clustered filesystems or databases) may also be collectively considered as a single non-transitory computer-readable medium. The computer-readable medium can include any one of many physical media such as magnetic, optical, or semiconductor media.

Further, any logic or application described herein can be implemented and structured in a variety of ways. For example, one or more applications described can be implemented as modules or components of a single application. Further, one or more applications described herein can be executed in shared or separate computing devices or a combination thereof. For example, a plurality of the applications described herein can execute in the same computing device, or in multiple computing devices in the vehicle computing environment 303.

It should be emphasized that the above-described embodiments of the present invention are merely possible examples of implementations set forth for a clear understanding of the principles of the invention.

## Claims

1. A system for optimizing tire performance, the system comprising:
a sensor (109) affixed to an innerliner of a tire (100) of a vehicle (203);
an automatic tire inflation system (206) coupled to the tire (100);
a computing device (112) comprising a processor and a memory, the sensor (109) and the automatic tire inflation system (206) being communicatively coupled to the computing device (112); and
machine-readable instructions stored in the memory that, when executed by the processor, cause the computing device (112) to at least:
determine a footprint length (127) of the tire (100) based at least in part on sensor data obtained from the sensor (109);
compare the footprint length (127) with a target footprint length range; and
send an instruction to the automatic tire inflation system (206) to initiate inflating or deflating the tire (100) in an instance in which the footprint length (127) is outside the target footprint length range.

2. The system of claim 1, wherein the tire (100) is inflated when the footprint length (127) is above the target footprint length range and/or wherein the tire (100) is deflated when the footprint length (127) is below the target footprint length range.

3. The system of claim 1 or 2, wherein the footprint length (127) comprises a first footprint length and wherein, when executed, the machine-readable instructions further cause the computing device (112) to:
determine a second footprint length based at least in part on subsequent data obtained from the sensor (109); and
instruct the automatic tire inflation system (206) to stop inflating or deflating the tire (100) in an instance in which the second footprint length is within the target footprint length range.

4. The system of at least one of the previous claims, wherein the target footprint length range is based at least in part on a tire position on the vehicle (203) and a tire type.

5. The system of at least one of the previous claims, wherein, when executed, the machine-readable instructions cause the computing device (112) to at least select the target footprint length range from a plurality of predefined footprint lengths based at least in part on one or more of a tire position, a tire type, or a tire load.

6. The system of at least one of the previous claims, wherein the automatic tire inflation system (206) is communicatively coupled to the computing device (112) via a control area network (CAN) bus (115) of the vehicle (203); and/or wherein the sensor (109) is in wireless communication with the computing device (112).

7. The system of at least one of the previous claims, wherein the footprint length (127) is determined independent of a vehicle load.

8. The system of at least one of the previous claims, wherein the sensor (109) comprises an accelerometer configured to measure the footprint length (127).

9. A method for optimizing tire performance, the method comprising:
obtaining, via a vehicle computing device (112), sensor data from a sensor (109) affixed to an innerliner of a tire (100) of a vehicle (203);
determining, via the vehicle computing device (112), a footprint length (127) of a tire (100) of a vehicle (203) based at least in part on the sensor data;
comparing, via the vehicle computing device (112), the footprint length (127) with a target footprint length range; and
sending, via the vehicle computing device (112), an instruction to an automatic tire inflation system (206) of the vehicle (203) to initiate inflating or deflating the tire (100) in an instance in which the footprint length (127) is outside the target footprint length range.

10. The method of claim 9, wherein the tire (100) is inflated when the footprint length (127) is above the target footprint length range; and/or wherein the tire (100) is deflated when the footprint length (127) is below the target footprint length range.

11. The method of claim 9 or 10, wherein the footprint length (127) comprises a first footprint length and wherein, when executed, the machine-readable instructions further cause the computing device (112) to:
determine a second footprint length based at least in part on subsequent data obtained from the sensor (109); and
instruct the automatic tire inflation system (206) to stop inflating or deflating the tire (100) in an instance in which the second footprint length is within the target footprint length range.

12. The method of at least one of the previous claims 9 to 11, wherein the target footprint length range is based at least in part on a tire position on the vehicle (203) and a tire type.

13. The method of at least one of the previous claims 9 to 12, wherein, when executed, the machine-readable instructions cause the computing device (112) to at least select the target footprint length range from a plurality of predefined footprint lengths based at least in part on a tire position, a tire type, or a tire load.

14. The method of at least one of the previous claims, wherein the automatic tire inflation system (206) is communicatively coupled to the computing device (112) via a control area network (CAN) bus (115) of the vehicle (203); and/or wherein the sensor (109) is in wireless communication with the computing device (112).

15. The method of at least one of the previous claims, wherein the footprint length (127) is determined independent of a vehicle load.
